# EUROPÄISCHE PATENTSCHRIFT

(11) **EP 1 375 219 B1**
(45) Veröffentlichungstag und Bekanntmachung des Hinweises auf die Patenterteilung: **07.11.2007**
(21) Anmeldenummer: 03012660.1
(22) Anmeldetag: 04.06.2003
(51) Int. Cl.: B60J 1/20

(54) **Heckscheibenrollo mit Hubkassette**
Roller blind for rear window with liftable storage box
Store à enrouleur pour lunette arrière avec boîtier levant

(30) Priorität: 24.06.2002 DE 10228028
(43) Veröffentlichungstag der Anmeldung: 02.01.2004
(73) Patentinhaber: BOS GmbH & Co. KG, 73760 Ostfildern (DE)
(72) Erfinder: Schlecht, Werner P., 71665 Vaihingen / Enz-Aurich (DE); Walter, Herbert, 73061 Ebersbach (DE); Hansen, Melf, 73666 Baltmannsweiler (DE); Lekar, Jan, 73262 Reichenbach / Fils (DE)
(74) Vertreter: Rüger, Barthelt & Abel Patentanwälte

(56) Entgegenhaltungen:
- EP-A- 0 424 327
- EP-B- 1 107 873
- DE-C- 4 202 081
- US-A- 5 067 546
- US-A1- 2002 059 989

## Beschreibung

In zunehmendem Maße setzen sich für Pkw-Limousinen Heckscheibenrollos durch. Diese werden aus Platzgründen üblicherweise unterhalb der Hutablage montiert, damit sie im eingefahrenen Zustand möglichst nicht störend in Erscheinen treten.

Damit sich bei eingefahrenem Heckscheibenrollo keine Teile in dem Schlitz für das Heckscheibenrollo verlieren können, ist die Zugstange häufig so gestaltet, dass sie den Schlitz weitgehend verdeckt. Dazu ist eine verhältnismäßig breite Zugstange notwendig, denn die Breite des Schlitzes ergibt sich aus dem radialen Abstand, den die Wickelwelle von der Oberseite der Hutablage aufweist, und der Neigung der Heckscheiben. Derart breite Zugstangen werden jedoch als störend empfunden, wenn das Heckscheibenrollo ausgefahren ist.

Zu einem Heckscheibenrollo, das in der DE 42 02 061 A1 beschrieben ist, gehört eine unterhalb der Hutablage drehbar gelagerte Wickelwelle, an der mit einer Kante die Rollobahn befestigt ist. Die andere Kante der Rollobahn ist an einem Zugstab angebracht, der mit Hebeln betätigt wird, die neben der Wickelwelle um Achsen schwenkbar sind, die parallel zur Fahrzeuglängsachse liegen. Bei eingefahrenem Rollo ist die Zugstange unter den Schlitz zurückgezogen.

Zum Verschließen des Schlitzes in der Hutablage ist eine bewegliche Klappe vorgesehen, deren Bewegung durch die Zugstange gesteuert wird. Die Klappe wird durch eine Feder in die geöffnete Stellung vorgespannt und durch die eingefahrene Zugstange geschlossen gehalten. Die Lagerungsmechanik für die Klappe ist aufwendig und wegen der Platzverhältnisse filigran.

Ausgehend hiervon ist es Aufgabe der Erfindung ein Heckscheibenrollo für Heckscheiben von Kraftfahrzeugen zu schaffen, das bei einfacher Montage in der Lage ist, den Schlitz in der Hutablage zu verdecken, und eine robuste Mechanik ermöglicht.

Diese Aufgabe wird erfindungsgemäß durch das Heckscheibenrollo mit den Merkmalen des Anspruches 1 gelöst.

Bei dem erfindungsgemäßen Heckscheibenrollo ist der Wickelwelle ein Rollorahmen zugeordnet, der in Lagereinrichtungen beweglich gelagert ist, so dass der Rollorahmen aus einer Ruhestellung in eine Betriebsstellung zu bringen ist.

Diese Anordnung eröffnet zwei Möglichkeiten:

Der Rollorahmen selbst kann als Verschlussglied für den Schlitz in der Hutablage herangezogen werden, womit separate Teile, die an dem Träger für die Wickelwelle zu lagern wären, entfallen. Außerdem ermöglicht die Lagerung der Rollowelle in dem Rollorahmen eine Verstellung der Lage der Wickelwelle, derart, dass die Wickewelle in eine günstigere Position zu bringen ist, günstiger im dem Sinne, dass sie näher an dem Schlitz steht, wodurch ein schmälerer Schlitz möglich wird.

Wenn die Zugstange des Heckscheibenrollos in seitlichen Führungsschienen geführt wird, vollführt die durch die Rollobahn definierte Ebene, während des Ausfahrens des Heckscheibenrollos eine mehr oder weniger starke Schwenkbewegung. Die Achse für die Schwenkbewegung ist die Linie an der sich die Rollobahn von dem Umfang des auf der Wickelwelle gebildeten Ballens an Rollobahn löst. Je weiter der Umfang der Wickelwelle von dem Schlitze beabstandet ist, umso größer muss die Breite des Schlitzes werden, damit während der Schwenkbewegung kein unerwünschter Kontakt zwischen den Rändern des Schlitzes und der Rollobahn zustande kommt. Die bewegliche Lagerung der Wickelwelle ist insoweit in der Lage, die sie in eine Stellung zu bringen, in der sie dem Schlitz näher benachbart ist.

Die andere Möglichkeit besteht darin, mit der Zugstange den Schlitze zu verschließen. Die Designer sind dabei bemüht, die Zugstange so filigran wie irgendwie möglich zu machen. Diese Entwicklung würde dazu führen, dass der Schlitz wird durch die Zugstange verschlossen, extrem schmal wird. Durch die bewegliche Lagerung der Wickelwelle kann der Schlitz verschmälert werden, ohne dass er beim Ausfahren, wie oben erwähnt, eine Berührung zwischen der Rollobahn und dem Schlitzrand zustande kommt.

Günstige Platzverhältnisse bei einer robusten Ausführung des Rollorahmens werden erhalten, wenn der Rollorahmen ein rohrförmiges Teil aufweist, in dem sich die Wickelwelle befindet. Das rohrförmige Teil ist mit einem über die Länge durchgehenden Schlitz versehen, durch den hindurch mindestens die Rollobahn austritt, oder aber auch zusätzlich die Zugstange zurückgezogen werden kann. Das rohrförmige Teil kann in einem Bereich seiner Seitenfläche abgeflacht sein, damit er den Schlitz der Hutablage möglichst glatt verschließt.

Wenn der Schlitz durch die Zugstange verschlossen wird, genügt es, wenn der Rollorahmen von zwei getrennten Teilen gebildet ist, die über die Wickelwelle miteinander verbunden sind und von denen jeder in der Karosserie oder unter der Hutablage gelagert ist.

Der Rollorahmen kann im Wesentlichen zylindrisch sein, wobei die endseitigen Lagerglieder an den Stirnenden des rohrförmigen Teils vorgesehen sind. In diesem Falle verläuft die Bewegungsachse durch den Innenraum des rohrförmigen Teils.

Die Betätigung der abliegenden Kante der Rollobahn geschieht zweckmäßigerweise mit Hilfe von Führungsschienen, die beidseits des Bewegungswegs der Zugstange verlaufen. Damit die Zugstange bis unter die Hutablage zurückgezogen werden kann, liegen die Führungsschiene in der Nähe der Wickelwelle und erstreckten sich über diese hinaus. Die Führungsschienen können zwischen sich eine Fläche begrenzen, die entweder durch den Ballen hindurch oder tangential an dem Ballen vorbeiläuft, der sich bei aufgewickelter Rollobahn auf der Wickelwelle bildet.

Damit der Rollorahmen die gewünschte Bewegung vollführen kann, ist im eine Betätigungseinrichtung zugeordnet. Diese Betätigungseinrichtung kann im einfachsten Falle von einer Feder gebildet sein, die die Anordnung in der gewünschten Weise vorspannt, oder die Bewegung kann aus der Betätigungseinrichtung für die Rollobahn selbst abgeleitet werden oder es besteht die Möglichkeit eine eigene Betätigungseinrichtung vorzusehen, die von der Betätigungseinrichtung für die Rollobahn unabhängig ist.

Die Lagereinrichtung für den Rollorahmen eröffnet zwei Gestaltungsmöglichkeiten. Sie kann so ausgeführt sein, dass der Rollorahmen bei seiner Betätigung sich um eine rotatorische Achse bewegt. Die andere Möglichkeit ist die Gestaltung mit einer translatorischen Achse. Im einen Falle werden Drehlager verwendet, während im anderen Falle Schiebeführungen eingesetzt werden.

Im übrigen sind Weiterbildungen der Erfindungen Gegenstand von Unteransprüchen. Dabei sollen auch solche Merkmalskombinationen als beansprucht angesehen werden, auf die kein ausdrückliches Ausführungsbeispiel gerichtet ist.

In der Zeichnung sind Ausführungsbeispiele des Gegenstandes der Erfindung dargestellt. Es zeigen:
- Fig. 1: einen stark schematisierten Ausschnitt aus einem Fahrzeug bei eingefahrenem Heckscheibenrollo,
- Fig. 2: die Anordnung nach Figur 1 bei ausgefahrenem Heckscheibenrollo,
- Fig. 3: eine stark schematisierte Seitenansicht unter Veranschaulichung des Rollogehäuses für das Heckscheibenrollo nach den Figuren 1 und 2 in der geschlossenen Stellung,
- Fig. 4: die Anordnung nach Figur 3 in der geöffneten Stellung,
- Fig. 5: die Antriebseinrichtung für das Heckscheibenrollo nach Fig. 3, in einer schematisierten Ausschnittsdarstellung für da linke Ende der Zugstaange,
- Fig. 6: ein weiteres Ausführungsbeispiel des erfindungsgemäßen Heckscheibenrollos, teilweise ausgefahren und in einer Seitensicht,
- Fig. 7: die Anordnung nach Figur 6 im eingefahrenen Zustand und teilweise seitlich aufgebrochen,
- Fig. 8: ein Ausführungsbeispiel mit einem vertikal verfahrbaren Rollorahmens, teilweise ausgefahren, und
- Fig. 9: eine Anordnung bei der der Schlitz in der Hutablage zumindest zum Teil durch die Zugstange verschlossen ist, im eingefahrenen Zustand.

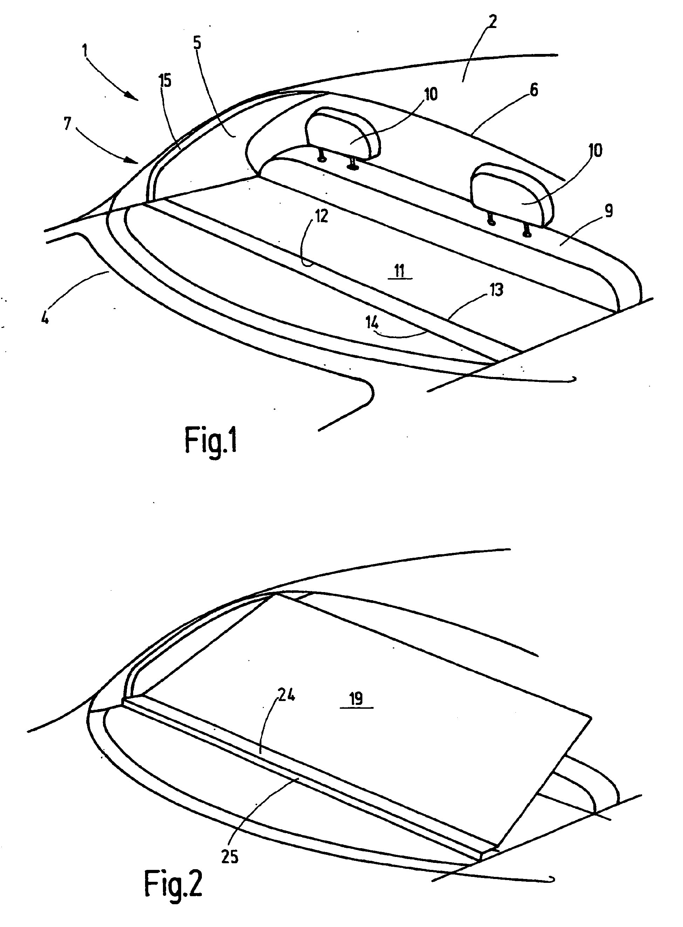

Figur 1 zeigt in einer stark schematisierten Ausschnittsdarstellung eine Heckpartie 1 einer Stufenhecklimousine. Zu erkennen ist ein Fahrzeugdach 2 sowie ein Abshnitt eines Kofferraumdeckls 4. Zwischen dem Kofferraumdeckel 4 und dem Dach 2 ist eine linke C-Säule 5 mit der daran befindlichen Innenverkleidung zu erkennen. Zwischen der linken C-Säule 5, einer Hinterkante 6 des Daches 2 und der Oberseite des Kofferraums ist ein Heckscheibenausschnitt 7 sichtbar, in dem sich eine Heckscheibe 8 befindet. Zwischen der Unterkante des Heckscheibenausschnittes 7 und der Rückseite einer hinteren Sitzbank 9 mit Kopfstützen 10 erstreckt sich eine Hutablage 11. Quer durch die Hutablage verläuft ein Schlitz 12, der in einer noch zu beschreibenden Weise verschlossen ist. Der Schlitz 12 wird von zwei zueinander parallelen Schlitzrändern 13 und 14 begrenzt. Er erstreckt sich zwischen den beiden C-Säulen 5.

Außerdem ist in der Innenverkleidung der linken C-Säule 5 eine Führungsschiene 15 zu erkennen, deren sichtbarer Verlauf auf der Höhe des Schlitzes 12 beginnt und die der seitlichen Kontur der Heckscheibenöffnung 7 bis in die Nähe des Daches 2 folgt.

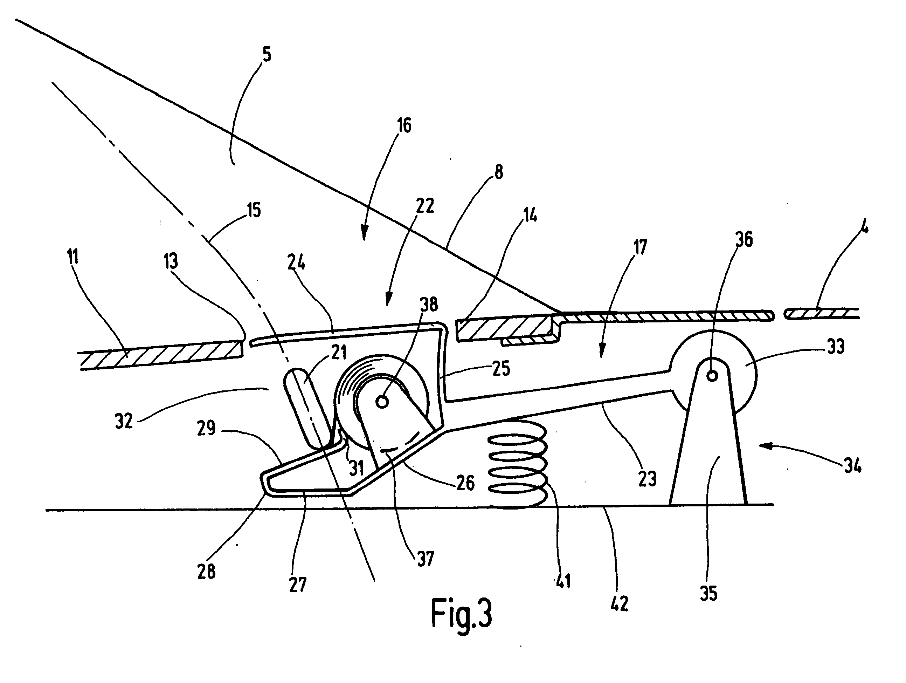

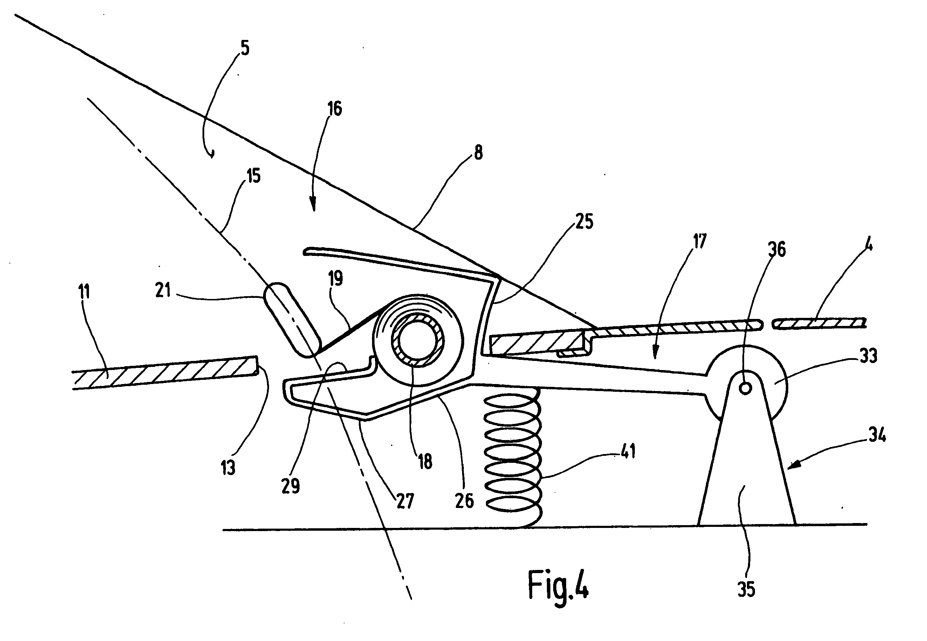

Unterhalb des Schlitzes 2 bzw. im Schlitz 2 befindet sich die Mechanik für ein Heckscheibenrollo 16. Der Aufbau des Heckscheibenrollos 16 wird nachstehend anhand der Figuren 3 und 4 erläutert.

Zu dem Heckscheibenrollo 16 gehört ein Rollorahmen oder -träger 17, in dem eine Wickelwelle 18 drehbar gelagert ist. An der Wickelwelle 18 ist mit einer Kante eine Rollobahn 19 befestigt, deren andere Kante mit einem Zugstab 21 verbunden ist.

Der Rollorahmen ist ein Strangpressprofil, das sich im Querschnitt gesehen aus einem rohrförmigen Abschnitt 22 und einem Ausleger oder Flansch 23 zusammensetzt. Der rohrförmige Teil wird von einem im Wesentlichen geraden Schenkel 24 gebildet, der in der Ruhestellung gemäß Figur 3 den Schlitz 12 zwischen den Rändern 13 und 14 im Wesentlichen ausfüllt. Von dem Schenkel 24 geht etwa rechtwinklig ein weiterer Schenkel 25 nach unten, der in einen schräg nach vorne verlaufenden Schenkel 26 übergeht. Der Schenkel 26 verläuft unter einem Winkel von ca. 60° und endet an einem weiteren Profilschenkel 27, der sich etwa parallel zu dem Schenkel 24 erstreckt. An einer Vorderkante bei 28 biegt der Schenkel 27 um ca. 170° um und bildet einen Auflageschenkel 29, der an einer nach oben aufragenden lippenförmigen Kante 31 endet. Auf diese Weise wird zwischen dem Schenkel 24 und dem Schenkel 29 des Profils ein Verhältnismäßig sehr weiter Auslaufschlitz 32 begrenzt. Die vordere Kante des Schenkels 24 befindet sich etwa oberhalb der Knickstelle 28 an der der Stelle 27 umgebogen ist.

An der Verbindungsstelle zwischen dem Schenkel 25 und dem Schenkel 26 geht der plattenförmige Ausleger 23 aus, der sich ebenfalls über die gesamte Länge des rohrförmigen Abschnittes 22 erstreckt. An seinem von dem rohrförmigen Abschnitt 22 abliegenden Ende ist der Ausleger 23 mit einer Wulst 33 versehen. Mit Hilfe der Wulst 33 ist der Rollorahmen 17 innerhalb der Karosserie gelagert. Hierzu ist eine Lagerungseinrichtung 34 vorhanden, die sich aus zwei im Abstand zueinander befindlichen vertikal aufragenden Laschen 35 zusammensetzt, der karosseriefest ist. Zwischen den Laschen 35 erstreckt sich der wulstförmige Abschnitt 33, d.h. der Abstand der Laschen 35, von denen wegen der Dartellung lediglich eine zu sehen ist, entspricht der Breite des Rollorahmens 17 gesehen in Richtung quer zu Fahrzeuglängsachse. In dem oberen Ende der Lasche 35 steckt ein Bolzen 36, der in eine korrespondierende Lagerbohrung des wulstförmigen Teils 33 hineinragt. Der Rollorahmen 17 ist um eine Achse parallel zu der Querachse des Fahrzeugs schwenkbar.

Die Lagerung des Rollorahmens 17 unterhalb der Hutablage 11 bzw. unterhalb der Dachaußenhaut im Bereichs des Hecks ist derart, dass sich der Auslaufschlitz 32 des rohrförmigen Abschnitts 22 in Richtung auf das vordere Ende des Kraftfahrzeugs öffnet. Die Lagerung befindet sich beim gezeigten Ausführungsbeispiel in der Nähe der Vorderkante der Heckklappe 4, d.h. zwischen der Unterkante des Heckfensterausschnittes 7 und der Kofferklappe 4. Abweichend ist es auch möglich, die Lagerung unterhalb des vorderen Teils der Hutablage 11 unterzubringen. Der Ausleger 23 würde dann im Bereich der vorderen Kante 13 ausgehen.

Zur Lagerung der Wickelwelle 18 sind auf dem unteren Schenkel 26 zwei Laschen 37 vorgesehen, die Lagerbohrungen 38 für Lagerzapfen der Wickelwelle 18 enthalten. Die Wickelwelle ist, wie Figur 4 erkennen lässt, rohrförmig und enthält in ihrem Inneren in bekannter Weise einen Federmotor, mit dem die Wickelwelle 18 im Sinne des Aufwickelns der Rollobahn 19 vorgespannt ist.

Zur Veranschaulichung der rohrförmigen Gestalt der Wickelwelle 18 ist in Figur 4 die Lagerungslasche 37 weggelassen.

Mit Hilfe einer oder mehrerer Schraubendruckfedern 41 wird der Rolloträger 17 in die nach oben gefahrene Stellung vorgespannt. Hierzu stützt sich die Schraubendruckfeder 41 einerseits auf einer karosseriefesten Unterlage 42, an der auch die Laschen 35 befestigt sind, und andererseits an der Unterseite des Auslegers 23 ab.

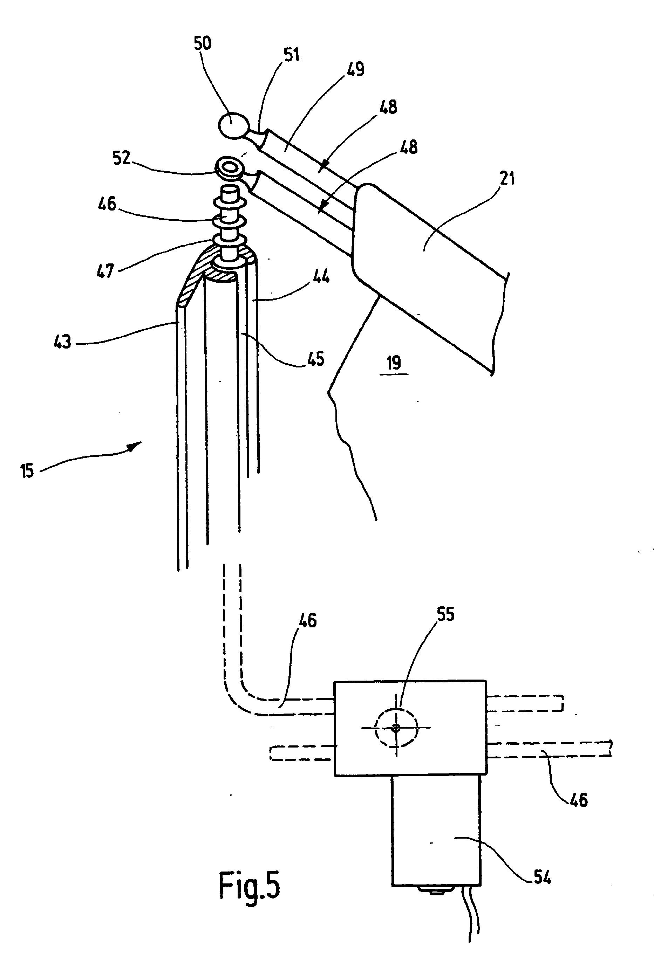

Wie bereits erwähnt, gehören zu dem Heckscheibenrollo 16 zusätzlich zwei Führungsschienen 15 die in Figur 1 gezeigt sind. Ihr Verlauf ist in den Figuren 3 und 4 mit einer strichpunktierten Linie symbolisiert. Die Gestalt und die Art und Weise, wie die Zugstange 21 geführt wird, ergibt sich aus Figur 5. Die Führungsschienen 15 verlaufen in beiden C-Säulen 5, und zwar so, dass sie zwischen sich eine Fläche aufspannen, deren Erzeugende eine Gerade ist.

Das genaue Profil der Führungsschienen 15 zeigt Figur 5. Hiernach bestehen die Führungsschiene 15 aus einem Befestigungsflansch 43 der an einem Ende mit einem rohrförmigen Profil 44 versehen ist, das sich an einem Führungsschlitz 45 öffnet. Der Schlitz 45 erstreckt sich über die gesamte Länge der Führungsschiene 15. Er öffnet sich in einer Richtung senkrecht zu dem Flansch 43.

Die Führungsschiene 15 dient gleichzeitig der knicksteifen Führung eines linienförmigen Schubglieds 46, das auf seiner Außenseite mit einer schraubenförmig verlaufenden Rippe 47 versehen ist.

Die Zugstange 21 hat ein, wie gezeigt, etwa ovales Profil, wobei an ihrer Unterkante die Rollobahn 19 befestigt ist. Der Zuschnitt der Rollobahn 19 entspricht etwa der trapezförmigen Annäherung der Gestalt des Fensterausschnittes 7.

In den stirnseitigen Enden der Zugstange 21 stecken zwei Führungsglieder 48, die einen zylindrischen Schaft 49 aufweisen, der in der Zugstange 21 längsverschieblich steckt. An dem oberen Schaft 49 befindet sich ein Kugelkopf 50, der mit dem Schaft 49 über einen Halsabschnitt 51 verbunden ist. Das untere Führungsglied 48 weist anstelle der Kugel 50 einen Befestigungsring 52 auf, der mit Hilfe eines nicht weiter gezeigten Befestigungsteils zug- und druckfest mit dem freien Endes des Schubglieds 46 verbunden ist. Der Außendurchmesser des Rings 43 und der Durchmesser des Kugelkopfes 50 entsprechen der lichten Weite des Führungsrohrs 44, damit beide in dem Führungsrohr 44 geführt gleiten können, ohne durch den Schlitz 45 herkommen zu können.

Der Antrieb des Schubgliedes 46 geschieht über einen Getriebemotor 54, dessen gestrichelt angedeutetes Ausgangszahnrad 55 mit einer Verzahnung versehen ist, die mit dem Schubglied 46 kämmt. Die schraubenlinienförmige Rippe 47 dient als Verzahnung, so dass das Schubglied 46 auch als gewendete Zahnstange angesehen werden kann.

Die in Figur 5 dargestellte Anordnung bestehend aus der Führungsschiene 15 und den Führungsgliedern 48 gilt für beide Seiten der abgebrochenen gezeigten Zugstange 21. Die beiden Schubglieder 46 werden durch einen gemeinsamen Getriebemotor 54 synchron angetrieben.

Die insoweit beschriebene Anordnung arbeitet wie folgt:

Bei eingefahrenen Heckscheibenrollo 16 liegt die Zugstange 21 auf dem Schenkel 29 des rohrförmigen Profils 22 auf. Sie wird auch in diesem Bereich zwischen den beiden Führungsschienen 15 geführt, weshalb die Führungsschienen 15 sich über das in Figur 1 erkennbare Ende im Bereich des Schlitzes 12 nach unten in das Fahrzeuginnere fortsetze. Sie verlaufen, wie gezeigt, etwa tangential bezüglich eines Zylinders, der durch den entstandenen Ballen aus der Rollobahn 19 gebildet ist vorbei. Sie laufen außerdem vor den stirnseitigen Enden des rohrförmigen Profilabschnittes 22.

Die Schubglieder 46 sind zurückgezogen, wobei durch die formschlüssige Verbindung des unteren Führungsgliedes 48 mit dem zugehörigen Schubglied 46 die Zugstange 21 an beiden Enden mit Kraft nach unten gedrückt wird, so dass sie auf dem Schenkel 29 aufliegt und im weiteren Verlauf der Bewegung den Rollorahmen 17 gegen die Wirkung der Federn 41 nach unten drückt. In der unteren Stellung verschließt der Schenkel 24 den Schlitz 12 nahezu vollständig, womit sich das Bild nach Figur 1 ergibt.

Wenn der Benutzer ausgehend von dieser Stellung des Heckscheibenrollo 16 ausfahren möchte, schaltet er den Antriebsmotor 54 ein. Der Antriebsmotor 54 setzt das Ausgangszahnrad 55 in Bewegung, und zwar in der Richtung, in der die Schubglieder 46 in den Führungsschienen 15 nach oben in Richtung auf das Dach 2 vorgeschoben werden. Dadurch wird die Zugstange 21 gleichsinnig an beiden Ende angehoben. Aufgrund der Wirkung der Federn 41 schwenkt der Rollorahmen 17 mit nach oben, solange bis der Ausleger 23 im Bereich des Schlitzrandes 14 von unten an der Hutablage 11 anstößt. Hierdurch ist die Stellung nach Figur 4 erreicht, in der der Schlitz 32 praktisch zur Gänze über der Oberseite der Hutablage 11 steht. Im weiteren Verlauf der Bewegung der Zugstange 21 kann sich nun die Zugstange 21 von dem Schenkel 29 lösen und sie bewegt sich, geführt in den Führungsschienen 15, in Richtung auf das Dach 2.

Die ausgezogene Stellung des Heckscheibenrollos zeigt Figur 2.

Zum Einfahren wird der Motor 54 in der umgekehrten Richtung in Gang gesetzt. Die Schubglieder 46 werden synchron zurückgezogen, so dass die Zugstange 21, die an ihren beiden Enden mit jeweils einem Schubglied 46 formschlüssig verbunden ist, in Richtung auf die Hutablage 11 zurückbewegt wird. Beim Zurückbewegen wird gleichzeitig im entsprechenden Maß die Rollobahn 19 auf der Wickelwelle 18 aufgewickelt. Die Kraft hierfür kommt von dem bereits erwähnten Federmotor.

Sobald sich die Zugstange 21 dem unterem Schenkel 29 nähert und an diesem anstößt, wird der Rollorahmen 17 gegen die Wirkung der Druckfedern 41 nach unten geschwenkt. Die hierfür notwendige Zugkraft wird von dem Antriebsmotor 54 über die Schubglieder 46 auf das untere Führungsglied 48 an jedem Ende der Zugstange 21 übertragen.

Der Vergleich zwischen den Figuren 3 und 4 lässt noch einen weiteren Vorteil der gezeigten Anordnung erkennen. Aufgrund der speziellen Lagerung des Profilabschnitts 22 vollführt dieser sowohl eine Vertikalbewegung als auch gleichzeitig eine Drehbewegung um die Achse des Lagerbolzens 36. Beim Überführen von der eingefahrenen Stellung in die ausgefahrene Stellung wird zum einen die Wickelwelle 18 dichter an die Heckscheibe 8 herangeführt. Sie taucht, wie Figur 4 erkennen lässt, über das Niveau der Hutablage 11 auf, womit sie so dicht wie irgend möglich neben der Innenseite der Heckscheibe 8 steht. Gleichzeitig wird durch die Schwenkbewegung auch der Auslaufschlitz 32 gedreht, zufolge der Orbitalbewegung um den Lagerzapfen 36. Aufarund dieser kombinierten Bewegung, kann die Rollobahn 19 bereits beginnend ab der Hutablage 11 sehr dicht neben der Innenseite der Heckscheibe 8 geführt werden. Würde hingegen die Wickelwelle 18 auch beim Ausziehen die tiefe Position beibehalten oder der Profilabschnitt 22 nicht gedreht werden, käme entweder ein sehr viel größerer Abstand zu der Heckscheibe 8 zustande oder aber die Rollobahn 19 würde an dem oberen Schenkel 24 streifen, wenn sie durch den Schlitz 32 ausgezogen wird.

Durch Verkürzen des Auslegers 23 lässt sich lässt sich bei gleichem Vertikalhub das Maß der Drehbewegung weiter vergrößern.

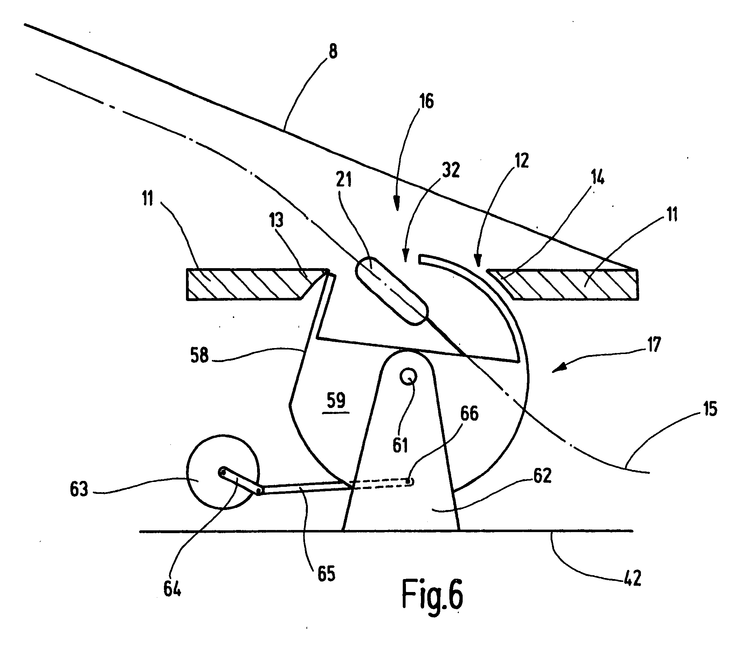

Figur 6 zeigt in einer schematisierten Seitenansicht ein weiteres Ausführungsbeispiel für das Heckscheibenrollo 16. Für Teile die funktionsmäßig Teilen aus dem vorherigen Ausführungsbeispiel entsprechen, werden dieselben Bezugszeichen verwendet.

Der Rolloträger 17 ist als im Wesentlichen zylindrisches Rohr ausgebildet, das bei 58 abgeflacht ist. Neben der abgeflachten Stelle 58 befindet sich der Auslaufschlitz 32, der über die gesamte Länge durchläuft..

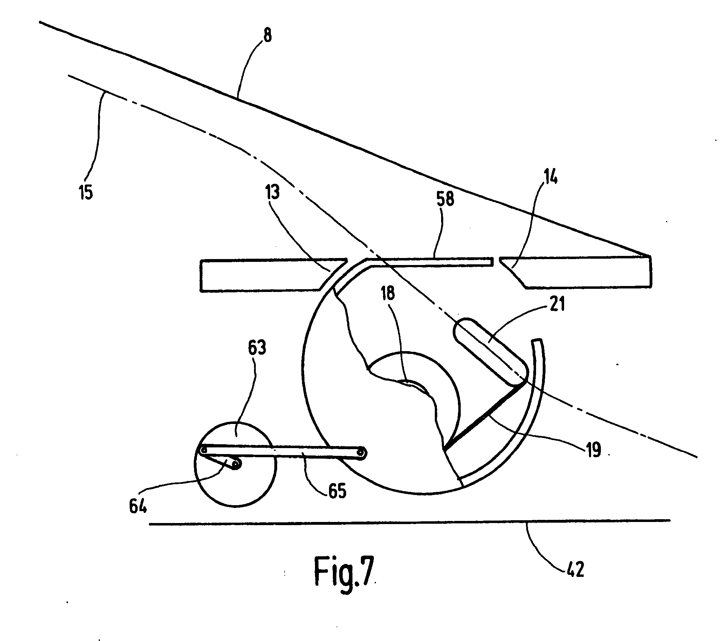

Das Rohr ist endseitig zum Teil durch Stirnwände 59 verschlossen, in denen ein Lagerzapfen 61 sitzt. Mit Hilfe des Lagerzapfens 61 ist der Rolloträger 17 zwischen karosseriefesten Laschen 62 drehbar gelagert. Um die erforderliche Schwenkbewegung zu vollführen ist ein separater Antriebsmotor 63 vorhanden, auf dessen Ausgangswelle eine Kurbel 64 sitzt, die über eine Kuppelstange 65 mit einem Befestigungszapfen 66 auf der Stirnwand 59 gekuppelt ist. Zwischen den beiden Stirnwänden 59 ist wie zuvor die Wickelwelle 18 drehbar gelagert, auf der die Rollobahn 19 aufgewickelt ist. Figur 7 lässt die Wickelwelle erkennen, da in dieser Figur die Stirnwand 59 aufgebrochen ist und auch die Lagerlasch 62 nicht nahegestellt ist.

Im übrigen entspricht der Aufbau dem Aufbau des Ausführungsbeispiels nach den Figuren 1 - 5, so dass eine erneute Erläuterung nicht erforderlich ist.

In der Ruhestellung ist mit Hilfe des Antriebsmotors 63 der Rolloträger 17 in eine Lage gedreht, in der er, wie Figur 7 erkennen lässt, mit der abgeflachten Seite 58 den Schlitz 12 im Wesentlichen vollständig verschließt. Die Zugstange 21 befindet sich unterhalb der Hutablage 11. Sie liegt gegen die Innenseite des rohrförmigen Rolloträgers 17 an. Der Auslaufschlitz 32 steht unter der Hutablage 11.

Die Strinwand 59 ist derart gestaltet, dass die Führungsglieder 48 seitlich über den Rolloträger 17 überstehen können, um in der Führungsschiene 15 geführt zu werden, die seitlich neben dem Stirnenden des Rolloträgers 17 vorbeiläuft.

Wenn der Benutzer das Heckscheibenrollo 16 ausfahren will, wird durch die Steuerung gleichzeitig mit dem in Gang setzen des Antriebsmotors 54 auch der Motor 63 eingeschaltet. Hierdurch wird die Zugstange 21 aus der in Figur 7 gezeigten Lage, in Richtung auf das Dach 2 vorgeschoben, d.h. in Richtung auf die Stellung, wie sie Figur 6 veranschaulicht. Synchron mit dieser Bewegung wird auch der Motor 63 eingeschaltet, und der Rolloträgere 17 um seine Längsachse gedreht.

Da die Wickelwelle 18 nicht koaxial zu dem Lagerzapfen 61 angeordnet ist, sondern seitlich daneben, führt die Drehbewegung des Lagerträgers 17 dazu, das auch die Rollwelle 18 mit dem darauf befindlichen Ballen aus Rollobahnmaterial 19 näher an den Schlitz 12 in der Hutablage 11 herangeführt wird. Die Zugstange 21 kann den Träger 17 durch den Schlitz 57 verlassen.

Das Einfahren des Heckscheibenrollos 16 geschieht sinngemäß in umgekehrter Richtung.

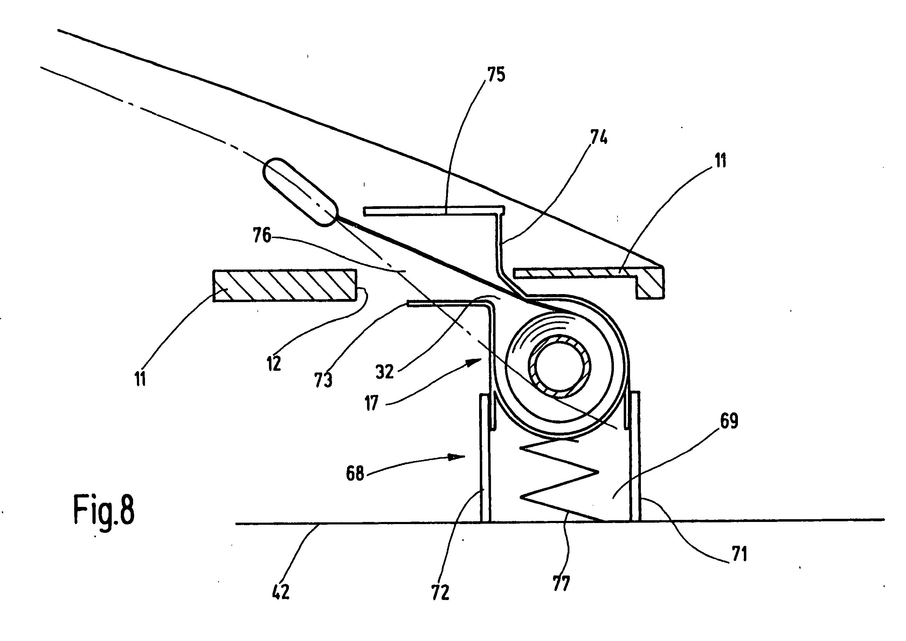

Figur 8 zeigt eine Ausführungsform bei der der Rolloträger 17 in einer Lagereinrichtung 68 längs verschieblich gelagert ist. Auf der karosseriefesten Unterlage 42 befindet sich eine Führungsschacht 69 der von zwei seitlichen Wänden 71 und 72 begrenzt ist. In diesem Schacht ist der Rolloträger 17 vertikal verschiebbar. Der Rolloträger 17 ist wiederum im Wesentlichen als Rohr ausgebildet, dass sich an einer Seite an dem Auslaufschlitz 32 öffnet. An dem Auslaufschlitz schließen sich ein horizontal verlaufender Flansch 73 an. Der obere Schlitzrand geht in einen vertikal nach oben verlaufenen Schenkel 74 über, der einen horizontal verlaufenden Flansch 75 trägt. Zwischen dem oberen Flansch 75 und dem unteren Flansch 73 wird ein weiterer Schlitz 76 begrenzt. Die Abmessungen des oberen Flansches 75 sind derart gewählt, dass dieser den Schlitz 12 in der Hutablage im Wesentlichen ausfüllen kann. Mittels einer Feder 77 ist der Rolloträger 17 in seiner obere Endlage vorgspannt.

Figur 8 zeigt die teilweise ausgefahrene Stellung, in der die Zugstange 21 den Spalt zwischen der Obseite der Hutablage 11 und der Unterseite des Flansches 75 passiert hat. Die Rollobahn 17 kann ohne weiteres in der vor erwähnten Weise weiter ausgefahren werden, wobei sie zwischen den Führungsschienen 15 geführt wird.

Zum Einfahren der Rollobahn 19 wird der Antriebsmotor 54 in der entgegengesetzten Richtung in Umdrehungen versetzt. Hierdurch laufen die Schubglieder 46 zurück und der in der Wickelwelle untergebrachte Federmotor vermag die Rollobahn 19 auf der Wickelwelle 18 aufzuwickeln.

Die Führungsschienen 15 verlaufen wie gezeigt, in einer Weise, dass die zwischen ihnen aufgespannte Fläche den unteren Schenkel 73 schneidet. Im Verlauf der Einfahrbewegung wird deswegen die Zugstange 21 durch den Spalt zwischen der Oberseite der Hutablage 11 und dem Flansch 75 in den Schlitz 76 einlaufen. Im Verlauf der weiteren Einfahrbewegung stößt er auf der Oberseite des Schenkels 73 auf. Das weitere kraftbetätigte abwärtsbewegen der Zugstange 21 durch die Schubglieder 46 nimmt den Schenkel 73 nach unten mit, so dass der Rollorahmen 17 in dem Schacht 69 gegen die Wirkung der dort vorhandenen Feder 77 nach unten bewegt wird.

Die Bewegung findet ihr Ende, sobald der Flansch 75 den Schlitz 12 in der Hutablage 11 verschließt, womit wiederum die Stellung nach Figur 1 erreicht ist.

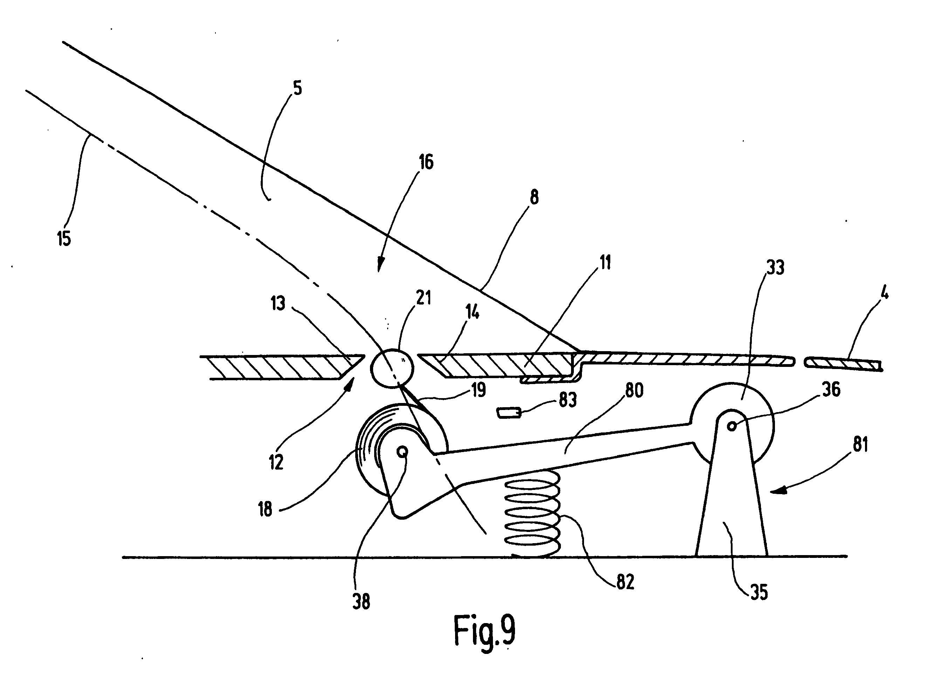

Bei dem Ausführungsbeispiel nach Figur 9 besteht der Rollorahmen aus zwei voneinander getrennten Hebeln 80, die entsprechend der Länge der Wickelwelle 18 voneinander beabstandet sind. Jeder der beiden Hebel 80 ist an einem Ende in einer eigenen karosseriefesten Lageeinrichtung 81 um eine Achse schwenkbar gelagert, die parallel zu der Wickelwelle 18 verläuft. Ferner wird jeder Hebel 80 durch eine eigene Schraubendruckfeder 82 in Richtung nach oben auf die Hutablage 11 vorgespannt. Am anderen Ende der Hebel 80 ist zwischen diesen die Wickelwelle 18 drehbar gelagert. Insoweit ähnelt die Anordnung der Anordnung, wie sie in den Figuren 3 und 4 gezeigt ist.

Die Zugstange 21 hat einen im Wesentlichen kreisförmigen Querschnitt, deren Durchmesser so bemessen ist, dass sie den Schlitz 12 in der Hutablage 11 im Wesentlichen ausfüllt.

Die Funktionsweise der gezeigten Anordnung ist wie folgt:

Im eingefahrenen Zustand wird der Antriebsmotor 54 stillgesetzt, sobald die Zugstange 21 sich in dem Schlitz 12 befindet. In diesem Zustand liegt an sich die Zugstange 21 an der Außenseite des Ballens auf, den die Rollobahn 19 auf der Wickelwelle 18 bildet.. Die Figur 9 ist in diesem Punkt nicht der Realität entsprechend, da dort die Zugstange 21 von dem Ballen beabstandet gezeigt ist. Hierdurch soll noch ein Stück Rollobahn 19 veranschaulicht werden, das sonst unsichtbar wäre. Tatsächlich liegt jedoch im eingefahrenen Zustand der Ballen an der Unterseite der Zugstange 12 an und zwar aufgrund der Kraft der beiden Federn 82, die die beiden Hebel 80 an den beiden Enden der Wickelwelle nach oben drücken, bis die Aufwärtsbewegung durch Anstoßen des Ballens an der Zugstange 21 gestoppt wird.

Zum Ausfahren wird der Motor 54 wie zuvor erwähnt in Gang gesetzt, wodurch die Zugstange 21 geführt in den Führungsschienen 15 aus dem Schlitz 12 nach oben in Richtung Dach wandert. Da hierdurch der Druck auf den Ballen auf der Wickelwelle 18 aufhört, wird die Wickelwelle 18 relativ dicht an den Auslaufschlitz 12 herangeführt. Das Heranführen bewerkstelligen die beiden Federn 82.

Die Anhebebewegung der Wickelwelle 18 wird beendet, sobald die beiden Hebel 80, jeder für sich an einem zugehörigen karosseriefesten Anschlag 83 anstößt. Die Lage des Anschlags 83 ist zweckmäßigerweise so gewählt, dass der Ballen nicht an dem Rand 13 oder 14 des Schlitzes 12 streift. Dennoch ist in dieser Stellung der Ballen sehr dicht an den Schlitz 12 herangerückt, damit die Linie längs derer sich die Rollobahn 19 von dem Ballen löst, praktisch in dem Schlitz 12 sichtbar ist. Die Schwenkbewegung, die die Rollobahn 19 um diese Ablöselinie vollführt, ist trotz engem Spalt zu klein, als dass die Rollobahn 19 mit den Rändern 13 oder 14 in Berührung kommen könnte, wenn die Zugstange 21 längs den Führungsschienen 15 zum Dach 2 wandert.

Die Vertikalbewegung der Wickelwelle 18 gestattet es, einen sehr schmalen Schlitz 12 zu verwenden, verglichen mit einer Anordnung, bei der die Wickelwelle 18 entsprechend der vertikalen Ausdehnung der Zugstange 21 starr unterhalb der Hutablage 11 angeordnet ist.

Um den Auslaufschlitz, den das Heckscheibenrollo in einer Hutablage erfordert, weitgehend zu verschließen, sitzt die Wickelwelle des Heckscheibenrollo in einem Rolloträger, der gegenüber der Unterseite der Hutablage beweglich ist. Dadurch kann entweder der Rolloträger selbst zum Verschließen des Schlitzes verwendet werden, wenn sich die Rollobahn im eingefahrenen Zustand befindet, oder aber die Wickelwelle kann dicht an den Schlitz herangeführt werden, damit ein schmaler durch eine dünne Zugstange verschließbarer Schlitz möglich wird.

## Patentansprüche

1. Heckscheibenrollo (16) für Heckscheiben von Kraftfahrzeugen,
mit einem Rollorahmen (17,80), in dem eine Wickelwelle (18) drehbar gelagert ist,
mit einer Rollobahn (19), die mit einer Kante an der Wickelwelle (18) befestigt ist und die eine von der Wickelwelle (18) abliegende Kante aufweist,
mit einer Betätigungseinrichtung (15,46,54), die mit der abliegenden Kante der Rollobahn (19) zusammenwirkt, um die Rollobahn (19) in eine ausgezogene Stellung zu bringen, in der sie sich zumindest teilweise vor der Heckscheibe (8) befindet,
mit einer Lagereinrichtung (34,62,68,81), mittels derer der Rollorahmen (17,80) beweglich in dem Kraftfahrzeug zu lagern ist, derart, dass der Rollorahmen (17) aus einer Ruhestellung in eine Betriebstellung zu bringen ist.

2. Heckscheibenrollo nach Anspruch 1, **dadurch gekennzeichnet dass**, der Rollorahmen (17,80) ein rohrförmiges Teil (22) aufweist, in dem sich die Wickelwelle (18) befindet.

3. Heckscheibenrollo nach Anspruch 2, **dadurch gekennzeichnet dass,** das rohrförmige Teil (22) mit einem über die Länge durchgehenden Schlitz (32) versehen ist.

4. Heckscheibenrollo nach Anspruch 2, **dadurch gekennzeichnet dass,** das rohrförmige Teil (22) in einem Bereich seiner Seitenfläche (24,58) abgeflacht ist.

5. Heckscheibenrollo nach Anspruch 2, **dadurch gekennzeichnet dass,** das rohrförmige Teil (22) endseitige Lager für die Wickelwelle enthält.

6. Heckscheibenrollo nach Anspruch 2, **dadurch gekennzeichnet dass**, der rohrförmige Teil (22) im Wesentlichen zylindrisch ist.

7. Heckscheibenrollo nach Anspruch 2, **dadurch gekennzeichnet dass,** der rohrförmige Teil (22) endseitig Lagerglieder (59,61) aufweist, die mit der Lagereinrichtung (34, 62, 68, 81) zusammenwirken.

8. Heckscheibenrollo nach Anspruch 1, **dadurch gekennzeichnet dass**, der Rollorahmen (17,80) zwei voneinander getrennt und durch die Wickelwelle (18) voneinander getrennte Teile (80) aufweist.

9. Heckscheibenrollo nach Anspruch 1, **dadurch gekennzeichnet dass,** der Rollorahmen (17,80) derart gestaltbar ist, dass er in der Ruhestellung einen in einer Hutablage (11) enthaltenen Schlitz (12) verschließt.

10. Heckscheibenrollo nach Anspruch 1, **dadurch gekennzeichnet dass,** der Wickelwelle (18) eine Antriebseinrichtung zugeordnet ist, um die Wickelwelle (18) im Sinne eines Aufwickelns der Rollobahn (19) anzutreiben.

11. Heckscheibenrollo nach Anspruch 10, **dadurch gekennzeichnet dass,** die Antriebseinrichtung von einem Federmotor gebildet ist.

12. Heckscheibenrollo nach Anspruch 1, **dadurch gekennzeichnet dass**, die der abliegenden Kante der Rollobahn (19) zugeordnete Betätigungseinrichtung (15,21,46,53) wenigstens eine Führungsschiene (15) umfasst, in der eine mit der betreffenden Kante der Rollobahn (19) verbundene Zugstange (21) geführt ist.

13. Heckscheibenrollo nach Anspruch 12, **dadurch gekennzeichnet dass,** die Führungsschiene (15) sich in der Nähe der Wickelwelle (18) über die Wickelwelle (18) hinaus erstreckt.

14. Heckscheibenrollo nach Anspruch 1, **dadurch gekennzeichnet dass,** die Bewegungsbahn der Rollobahn (19) eine gekrümmten Fläche definiert, die tangential an der Wickelwelle (18) vorbeiführt.

15. Heckscheibenrollo nach Anspruch 12, **dadurch gekennzeichnet dass**, die Zugstange (21) beidends in Führungsschienen (15) geführt ist und das die beiden Führungsschiene (15) eine gekrümmte Führungsfläche aufspannen, deren erzeugende eine Gerade ist.

16. Heckscheibenrollo nach Anspruch 1, **dadurch gekennzeichnet dass**, dem Rollorahmen (17,80) eine zusätzliche Betätigungseinrichtung (41,63,77) zugeordnet ist, um den Rollorahmen (17,80) aus der Ruhestellung in die Betriebstellung zu bringen.

17. Heckscheibenrollo nach Anspruch 1 oder nach Anspruch 16, **dadurch gekennzeichnet dass,** die Betätigungseinrichtung (15,46,54) oder die zusätzliche Betätigungseinrichtung (41,63,77) für den Rollorahmen (17,80) zusätzlich dazu eingerichtet sind, den Rollorahmen (17,80) aus der Betriebstellung in die Ruhestellung zu überführen.

18. Heckscheibenrollo nach Anspruch 16, **dadurch gekennzeichnet dass,** die zusätzliche Betätigungseinrichtung (41,77) von wenigstens einer Druckfeder gebildet ist.

19. Heckscheibenrollo nach Anspruch 1, **dadurch gekennzeichnet dass**, die Lagereinrichtung (34,62,68,81) für den Rollorahmen (17,80) derart gestaltet ist, dass die Bewegungsachse für den Rollorahmen (17,80) eine rotatorische Achse ist.

20. Heckscheibenrollo nach Anspruch 19, **dadurch gekennzeichnet dass**, die rotatorische Achse durch das rohrförmige Teil (22) verläuft.

21. Heckscheibenrollo nach Anspruch 19, **dadurch gekennzeichnet dass**, die rotatorische Achse neben dem rohrförmigen Teil (22) verläuft.

22. Heckscheibenrollo nach Anspruch 1, **dadurch gekennzeichnet dass,** die Lagereinrichtung (34,62,68,81) für den Rollorahmen (17,80) derart gestaltet ist, dass die Bewegungsachse für den Rollorahmen (17,80) eine translatorsiche Achse ist.

23. Heckscheibenrollo nach Anspruch 1, **dadurch gekennzeichnet dass,** die Lagereinrichtung (34,62,68,81) eine Schiebeführung umfasst.

24. Heckscheibenrollo nach einem der Ansprüche 12, 13 oder 15, **dadurch gekennzeichnet dass,** die Zugstange (21) eine solche Abmessung in Richtung quer zu der Fläche der Rollobahn (19) aufweist, dass sie einen Rolloschlitz (12) in einer Hutablage (11) des Kraftfahrzeugs in dessen Quererstreckung zumindest zum überwiegenden Teil verschließt.

## Claims

1. Rear window roller blind (16) for motor vehicle rear windows,
with a roller blind frame (17, 80), in which a winding shaft (18) is rotatably disposed,
with a blind sheet (19), which is fastened to the winding shaft (18) at one edge and has an edge remote from the winding shaft (18),
with an operating means (15, 46, 54), which cooperates with the remote edge of the blind sheet (19) in order to bring the blind sheet (19) into an extended position, in which it is located at least partially in front of the rear window (8), with a bearing means (34, 62, 68, 81), by means of which the roller blind frame (17, 80) can be movably disposed in the motor vehicle, such that the roller blind frame (17) can be brought out of a resting position into an operating position.

2. Rear window roller blind according to Claim 1, **characterised in that** the roller blind frame (17, 80) has a tubular part (22), in which the winding shaft (18) is located.

3. Rear window roller blind according to Claim 2, **characterised in that** the tubular part (22) is provided with a through slot (32) over the length.

4. Rear window roller blind according to Claim 2, **characterised in that** the tubular part (22) is flattened in a region of its side face (24, 58).

5. Rear window roller blind according to Claim 2, **characterised in that** the tubular part (22) contains bearings on the end side for the winding shaft.

6. Rear window roller blind according to Claim 2, **characterised in that** the tubular part (22) is substantially cylindrical.

7. Rear window roller blind according to Claim 2, **characterised in that** the tubular part (22) has bearing elements (59, 61) on the end side, which cooperate with the bearing means (34, 62, 68, 81).

8. Rear window roller blind according to Claim 1, **characterised in that** the roller blind frame (17, 80) has two parts (80), which are separated from one another and are separated by the winding shaft (18).

9. Rear window roller blind according to Claim 1, **characterised in that** the roller blind frame (17, 80) can be configured in such a manner that in the resting position it closes a slot (12) contained in a parcel shelf (11).

10. Rear window roller blind according to Claim 1, **characterised in that** the winding shaft (18) has an associated drive means to drive the winding shaft (18) in the direction of winding up the blind sheet (19).

11. Rear window roller blind according to Claim 10, **characterised in that** the drive means is formed by a spring motor.

12. Rear window roller blind according to Claim 1, **characterised in that** the operating means (15, 21, 46, 53) associated with the remote edge of the blind sheet (19) comprises at least one guide rail (15), in which a pull rod (21) connected to the respective edge of the blind sheet (19) is guided.

13. Rear window roller blind according to Claim 12, **characterised in that** the guide rail (15) extends in the vicinity of the winding shaft (18) to beyond the winding shaft (18).

14. Rear window roller blind according to Claim 1, **characterised in that** the movement path of the blind sheet (19) defines a curved area running tangentially past the winding shaft (18).

15. Rear window roller blind according to Claim 12, **characterised in that** the pull rod (21) is guided at both ends in guide rails (15), and that the two guide rails (15) span a curved guide area, the generatrix of which is a straight line.

16. Rear window roller blind according to Claim 1, **characterised in that** an additional operating means (41, 63, 77) is associated with the roller blind frame (17, 80) to bring the roller blind frame (17, 80) out of the resting position into the operating position.

17. Rear window roller blind according to Claim 1 or according to Claim 16, **characterised in that** the operating means (15, 46, 54) or the additional operating means (41, 63, 77) for the roller blind frame (17, 80) is additionally configured to move the roller blind frame (17, 80) out of the operating position into the resting position.

18. Rear window roller blind according to Claim 16, **characterised in that** the additional operating means (41, 77) is formed by at least one pressure spring.

19. Rear window roller blind according to Claim 1, **characterised in that** the bearing means (34, 62, 68, 81) for the roller blind frame (17, 80) is configured such that the movement axis for the roller blind frame (17, 80) is a rotational axis.

20. Rear window roller blind according to Claim 19, **characterised in that** the rotational axis runs through the tubular part (22).

21. Rear window roller blind according to Claim 19, **characterised in that** the rotational axis runs next to the tubular part (22).

22. Rear window roller blind according to Claim 1, **characterised in that** the bearing means (34, 62, 68, 81) for the roller blind frame (17, 80) is configured such that the movement axis for the roller blind frame (17, 80) is a translational axis.

23. Rear window roller blind according to Claim 1, **characterised in that** the bearing means (34, 62, 68, 81) is a slide guide.

24. Rear window roller blind according to one of Claims 12, 13 or 15, **characterised in that** that pull rod (21) has such a dimension in the transverse direction to the surface of the blind sheet (19) that it closes a roller blind slot (12) in a parcel shelf (11) of the motor vehicle in its transverse extent at least for the most part.

## Revendications

1. Store à enrouleur pour lunette arrière (16) de véhicule automobile qui comprend
- un cadre de store (17, 80) dans lequel est monté en rotation un arbre d'enroulement (18),
- une bande de store (19) qui est fixée par un bord à l'arbre d'enroulement (18) et dont l'autre bord est éloigné de cet arbre,
- un dispositif d'actionnement (15, 46, 54) qui coopère avec le bord éloigné de la bande de store (19) pour amener celle-ci en une position étirée dans laquelle elle se trouve au moins en partie devant la lunette arrière (8),
- un dispositif de paliers (34, 52, 68, 81) par lequel la bande de store (17, 80) est montée mobile dans le véhicule automobile de manière à pouvoir passer d'une position de repos à une position de service.

2. Store à enrouleur pour lunette arrière selon la revendication 1, **caractérisé en ce que** le cadre de store (17, 80) présente une partie tubulaire (22) dans laquelle est monté l'arbre d'enroulement (18)..

3. Store à enrouleur pour lunette arrière selon la revendication 2, **caractérisé en ce que** la partie tubulaire (22) présente une fente (32) continue sur toute sa longueur.

4. Store à enrouleur pour lunette arrière selon la revendication 2, **caractérisé en ce que** la partie tubulaire (22) est aplatie dans une zone de sa surface latérale (24, 28).

5. Store à enrouleur pour lunette arrière selon la revendication 2, **caractérisé en ce que** la partie tubulaire (22) présente vers ses extrémités des paliers pour l'arbre d'enroulement (18).

6. Store à enrouleur pour lunette arrière selon la revendication 2, **caractérisé en ce que** la partie tubulaire (22) est essentiellement cylindrique.

7. Store à enrouleur pour lunette arrière selon la revendication 2, **caractérisé en ce que** la partie tubulaire (22) présente à son extrémité des organes de palier (59, 61) qui coopèrent avec le dispositif de paliers (34, 62, 68, 81).

8. Store à enrouleur pour lunette arrière selon la revendication 1, **caractérisé en ce que** le cadre de store (17, 80) présente des parties (80) séparées l'une de l'autre par l'arbre d'enroulement.

9. Store à enrouleur pour lunette arrière selon la revendication 1, **caractérisé en ce que** le cadre de store (17, 80) peut être configuré de manière à obturer, en position de repos, une fente (12) pratiquée dans la plage arrière (11).

10. Store à enrouleur pour lunette arrière selon la revendication 1, **caractérisé en ce qu'**à l'arbre d'enroulement est associé un dispositif d'entraînement servant à faire tourner l'arbre d'enroulement (18) dans le sens assurant l'enroulement de la bande de store (19).

11. Store à enrouleur pour lunette arrière selon la revendication 10, **caractérisé en ce que** le dispositif d'entraînement est un moteur élastique.

12. Store à enrouleur pour lunette arrière selon la revendication 1, **caractérisé en ce que** le dispositif d'actionnement (15, 21, 46, 53) associé au bord libre de la bande de store (19) comprend au moins un rail de guidage (15) dans lequel se déplace la tige de traction (21) reliée au bord concerné de la bande de store (19).

13. Store à enrouleur pour lunette arrière selon la revendication 12, **caractérisé en ce que** le rail de guidage (15) s'étend sur l'arbre d'enroulement (18), à proximité de celui-ci.

14. Store à enrouleur pour lunette arrière selon la revendication 1, **caractérisé en ce que** la trajectoire de la bande de store (19) définit une surface courbe tangente à l'arbre d'enroulement (18).

15. Store à enrouleur pour lunette arrière selon la revendication 12, **caractérisé en ce que** la tige de traction (21) se déplace par ses deux extrémités dans des rails de guidage (15) qui définissent une surface de guidage courbe dont la génératrice est une droite.

16. Store à enrouleur pour lunette arrière selon la revendication 1, **caractérisé en ce qu'**au cadre de store (17, 80) est associé un dispositif supplémentaire d'actionnement (41, 63, 77) pour faire passer le cadre de store (17, 80) de la position de repos à la position de service.

17. Store à enrouleur pour lunette arrière selon la revendication 1 ou 16, **caractérisé en ce que** le dispositif d'actionnement (15, 46, 54) ou le dispositif supplémentaire d'actionnement (41, 63, 77) de la bande de store (17, 80) sont de plus conçus pour faire passer le cadre de store (17, 80) de la position de service à la position de repos.

18. Store à enrouleur pour lunette arrière selon la revendication 16, **caractérisé en ce que** le dispositif supplémentaire d'actionnement (41, 77) est constitué par au moins un ressort de poussée.

19. Store à enrouleur pour lunette arrière selon la revendication 1, **caractérisé en ce que** le dispositif de paliers (34, 62, 68, 81) pour le cadre de store (17, 80) est constitué de manière que l'axe de déplacement de ce cadre de store est un axe de rotation.

20. Store à enrouleur pour lunette arrière selon la revendication 19, **caractérisé en ce que** l'axe de rotation traverse la partie tubulaire (22).

21. Store à enrouleur pour lunette arrière selon la revendication 19, **caractérisé en ce que** l'axe de rotation passe à côté de la partie tubulaire (22).

22. Store à enrouleur pour lunette arrière selon la revendication 19, **caractérisé en ce que** le dispositif de paliers (34, 62, 68, 81) pour le cadre de store (17, 80) est configuré de manière que l'axe de déplacement de ce cadre de store est un axe de translation.

23. Store à enrouleur pour lunette arrière selon la revendication 1, **caractérisé en ce que** le dispositif de paliers (34, 62, 68, 81) comprend un guidage de coulissement.

24. Store à enrouleur pour lunette arrière selon une des revendications 12, 13 ou 15, **caractérisé en ce que** la tige de traction (21) présente, transversalement à la surface de la bande de store (19) une dimension telle que cette tige obture une fente de store (12) dans la plage arrière (11) du véhicule automobile, au moins de manière importante dans la direction transversale de cette fente.
